# EUROPEAN PATENT SPECIFICATION

(11) **EP 2 116 361 B1**
(45) Date of publication and mention of the grant of the patent: **19.10.2011**
(21) Application number: 08720725.4
(22) Date of filing: 06.02.2008
(51) Int. Cl.: B29D 30/06, B60C 5/14

(54) **METHOD FOR PRODUCING PNEUMATIC TIRE HAVING LIGHT-BLOCKING PROTECTIVE LAYER ON SURFACE OF AIR PERMEATION PREVENTIVE LAYER**
VERFAHREN ZUR HERSTELLUNG EINES LUFTREIFENS MIT LICHTABWEISENDER SCHUTZSCHICHT AUF DER OBERFLÄCHE DER LUFTDURCHDRINGUNGSSCHUTZSCHICHT
PROCÉDÉ DE FABRICATION D'UN PNEUMATIQUE COMPORTANT UNE COUCHE PROTECTRICE BLOQUANT LA LUMIÈRE À LA SURFACE D'UNE COUCHE PRÉVENTIVE DE PERMÉABILITÉ À L'AIR

(30) Priority: 06.02.2007 JP 2007026829
(43) Date of publication of application: 11.11.2009
(73) Proprietor: The Yokohama Rubber Co., Ltd., Minato-ku Tokyo 105-8685 (JP)
(72) Inventor: TOMOI, Shusaku, Hiratsuka-shi Kanagawa 254-8601 (JP)
(74) Representative: HOFFMANN EITLE
(86) International application number: PCT/JP2008/052388
(87) International publication number: WO 2008/096900

(56) References cited:
- EP-A2- 0 337 279
- JP-A- 01 314 164
- JP-A- 08 216 610
- JP-A- 2004 196 255
- JP-A- 2007 116 983
- US-A- 5 938 869
- US-B1- 6 253 814

## Description

### TECHNICAL FIELD

The present invention relates to a method for producing a pneumatic tire having a light blocking protective layer (or ray shielding layer) on the surface of an air permeation preventive layer, more specifically relates to a method for producing a pneumatic tire by placing the light blocking protective layer on the surface of a layer of a thermoplastic resin, or a layer of thermoplastic elastomer composition comprised of a thermoplastic resin in which an elastomer component is dispersed, as an air permeation preventive layer in a pneumatic tire, so as to alleviate the problem of degradation of the air permeation preventive layer caused by sunlight.

### BACKGROUND ART

Providing, at a tire inner surface, a layer of a thermoplastic resin, or a layer of a thermoplastic elastomer composition comprised of a thermoplastic resin in which an elastomer component is dispersed, as an air permeation preventive layer (or an inner liner) so as to reduce tire weight has been proposed (e.g., see Japanese Patent Publication (A) No. 8-216610). However, when a pneumatic tire having a vulcanized layer of a thermoplastic resin or a layer of a thermoplastic elastomer composition on the surface thereof in this way is allowed to stand outdoors, direct sunlight strikes the layer of the thermoplastic resin or the layer of the thermoplastic elastomer composition to thereby cause the degradation of the thermoplastic resin or the thermoplastic elastomer composition.

EP 0 337 279 A2 describes a gas barrier structure for pneumatic articles, comprising a gas barrier film having a low gas permeability, in which the gas barrier film is laminated between and bonded to two vulcanizable elastomeric surface layers and is a non-elastomeric polymer layer having a specified air permeability.

US 5,938,869 describes a pneumatic tire having an air permeation preventive layer comprised of a film or sheet composed of a polymer composition containing a thermoplastic resin or a blend of a thermoplastic resin and an elastomer with a specified air permeation coefficient and a specified Young's modulus, wherein the film is arranged so that at least one turn of the film in the tire circumferential direction is free from a join.

### DISCLOSURE OF THE INVENTION

Accordingly, an object of the present invention is to prevent the degradation caused by sunlight of an air permeation preventive layer of a pneumatic tire using a thermoplastic resin or a thermoplastic elastomer composition comprised of a thermoplastic resin in which an elastomer component is dispersed, as the air permeation preventive layer.

In accordance with the present invention, there is provided a method for producing a pneumatic tire having a layer of a thermoplastic resin or a layer of thermoplastic elastomer composition comprised of a thermoplastic resin in which an elastomer component is dispersed arranged as an air permeation preventive layer on the inner surface of the tire and having a light blocking protective layer, placed on the surface of the air permeation preventive layer after vulcanization.

The resulting pneumatic tire has a thermoplastic resin or a thermoplastic elastomer composition comprised of a thermoplastic resin in which an elastomer component is dispersed, placed, as an air permeation preventive layer, on the tire inner surface and has a light blocking protective layer having a light transmittance of preferably less than 10% at a wavelength range of 280 to 400 nm arranged on the surface of the air permeation preventive layer after vulcanization.

A pneumatic tire in which degradation of the air permeation preventive layer caused by sunlight can be obtained by further placing a light blocking protective layer containing a light blocking substance on the surface of an air permeation preventive layer comprising a thermoplastic resin or a thermoplastic elastomer composition comprised of a thermoplastic resin in which an elastomer component is dispersed, placed on the inner surface after tire vulcanization, whereby can be increased the weather resistance of the inner surface.

### BEST MODE FOR CARRYING OUT THE INVENTION

The inventors engaged in research to solve the aforementioned problem and, as a result, succeeded in obtaining a pneumatic tire having good weather resistance by providing a light blocking layer on the surface of a layer of a thermoplastic resin, or a layer of a thermoplastic elastomer composition comprised of a thermoplastic resin in which an elastomer component is dispersed, arranged as an air barrier laer, without compounding a photodegradation preventing agent, to the layer per se, so as to suppress the photodegradation after vulcanization.

According to the present invention, to achieve the object of the present invention, a light blocking protective layer containing a light blocking substance is placed on the tire inner surface. This light blocking protective layer is further placed, after tire vulcanization, on the surface of an air permeation preventive layer of a thermoplastic resin or a thermoplastic elastomer composition comprised of a thermoplastic resin in which an elastomer component is dispersed. If this light blocking protective layer is tried to arrange before vulcanization of the tire, the light blocking protective layer is liable to be degraded and melted due to the high temperature during tire vulcanization or is liable to be damaged by contacting to the vulcanization bladder.

According to the present invention, the light blocking protective layer is placed on the air permeation preventive layer after vulcanization. For example, a latex containing a light blocking substance can be coated on the surface of the air permeation preventive layer, then dried to form the light blocking protective layer, a resin emulsion containing a light blocking substance can be coated on the surface of the air permeation preventive layer, then dried to form the light blocking protective layer, a resin or rubber containing a light blocking substance can be coated on the surface of the air permeation preventive layer in a liquid state dissolved in water or an organic solvent, then dried to form the light blocking protective layer, a wax containing a light blocking substance can be coated on the surface of the air permeation preventive layer to form the light blocking protective layer or a resin sheet or rubber sheet containing a light blocking substance can be prepared in advance then attached to the surface of the air permeation preventive layer of the inner surface of a vulcanized tire to form the light blocking protective layer.

According to the present invention, when placing a light blocking protective layer on the surface of the air permeation preventive layer, to increase the adhesion or bonding of the light blocking protective layer to the air permeation preventive layer, the surface of the air permeation preventive layer may be treated in advance with general electron beam treatment, corona discharge treatment, ultraviolet light treatment, plasma treatment and the like or may be coated, for further improvement of adhesion, with a primer according to an ordinary method.

Further, according to the present invention, when a light blocking protective layer in the form of a sheet on the surface of the air permeation preventive layer, an adhesive is preferably used with the object of adhesion or bonding with the air permeation preventive layer. The type of adhesive that may be used in the present invention is not particularly limited so long as it is capable of increasing the adhesion or bonding to the air permeation preventive layer, however, silicone-based, cellulose-based, synthetic rubber-based, natural rubber-based, cyanoacrylate-based, vinyl acetate-based, epoxy-based or acryl-based adhesives or hot melt-based adhesives or the like may be mentioned. Further, epoxy-based, phenol-based, silane compound-based, resorcinol-based, urethane-based or other primers may be used in combination with the adhesives.

The light blocking protective layer preferably has a light transmittance of 10% or less, more preferably 1% or less, at a wavelength range of 280 to 400 nm. Note that the light transmittance is measured using a general spectrophotometer and calculating an average for each 10 nm within a range of 280 to 400 nm. This is because this wavelength region is the range of ultraviolet light, which is the primary cause of photodegradation.

The light blocking substance compounded to the light blocking protective layer is not particularly limited, but, for example, pigments or dyes (e.g., carbon black, aniline black, titanium oxide, zinc oxide, black iron oxide, calcium carbonate, titanium black or the like), metal powders (e.g., aluminum flakes, copper powder, brass powder, tin powder) or an ultraviolet light absorber (for example, a benzophenone-based ultraviolet light absorber, benzotriazole-based ultraviolet light absorber, salicylic acid derivative ultraviolet light absorber) may be mentioned. Among these, carbon black, titanium oxide, zinc oxide, black iron oxide and a benzotriazole-based ultraviolet light absorbers have a high light blocking effect even among the different types of light blocking substances, and, therefore, they are preferred. The amount of the light blocking substance is, based upon the total solid content in the light blocking layer as 100 % by weight, at least 0.1 % by weight, more preferably at least 1 % by weight, further preferably at least 3 % by weight. If the amount is lower than the above value, the desired light blocking property is liable to not be secured. There are no upper limits of the amount, but from the viewpoint of the decreased in the durability of the light blocking protective layer, 50 % by weight or less is preferable.

The composition forming the light blocking protective layer is not particularly limited so long as it contains the above light blocking substance, but diene-based rubbers (e.g., natural rubbers (NR), styrene butadiene rubbers (SBR), butadiene rubbers (BR), isoprene rubbers (IR) or nitrile rubbers (NBR)), olefin-based rubbers (e.g., ethylene-vinyl acetate copolymers (EVA) or ethylene-propylene-based rubbers (EPM, EPDM)), butyl-based rubbers (e.g., butyl rubbers (IIR), brominated butyl rubbers (Br-IIR), chlorinated butyl rubbers (Cl-IIR), isobutylene para-methylstyrene copolymers (IMS), brominated isobutylene para-methylstyrene copolymers (BIMS)), urethane-based rubbers, acryl-based rubbers, silicone-based rubbers, polyolefin-based resins (e.g., polyethylenes, polypropylenes, polyvinyl alcohols, ethylene-vinyl alcohol copolymers, polyvinyl acetates, ethylene-vinyl acetate copolymers, polyacryl-based resins, polymethacrylate-based resins, polyvinyl chlorides, polyvinylidene chlorides or polybutenes), nylons (e.g., 6 Nylon, 11 Nylon or 6.6 Nylon), polyesters (e.g., polyethylene terephthalates (PET), polyethylene naphthalates (PEN) or polybutylene terephthalates (PBT)), polycarbonates, polyimides, polyurethanes, fluorine resins, thermoplastic elastomers (e.g., styrene-based elastomers, olefin-based elastomers or polyamide-based elastomers), waxes (paraffin waxes, petrolatum waxes, beeswaxes) may be mentioned as an ingredient. These may be used alone or in any combination of two or more types.

Further, the light blocking protective layer of the present invention may suitably contain, to an extent not impairing the necessary characteristics, compatibilizers, anti-oxidants, vulcanizers, vulcanization accelerators, vulcanization accelerator aids, vulcanization retardants, plasticizers, fillers, colorants, processing aids, preservatives, surfactants, thickeners, emulsifiers and other various types of general additives.

As typical thermoplastic resins used for forming the air permeation preventive layer of the tire in the present invention, for example, polyamide-based resins (e.g., Nylon 6 (N6), Nylon 66 (N66), Nylon 46 (N46), Nylon 11 (N11), Nylon 12 (N12), Nylon 610 (N610), Nylon 612 (N612), Nylon 6/66 copolymer(N6/66), Nylon 6/66/610 copolymers (N6/66/610), Nylon MXD6 (MXD6), Nylon 6T, Nylon 6/6T copolymer, Nylon 66/PP copolymers, Nylon 66/PPS copolymers and their N-alkoxyalkyl compounds), polyester-based resins (e.g., polybutylene terephthalates (PBT), polyethylene terephthalates (PET), polyethylenes isophthalates (PE10), PET/PEI copolymers, polyarylates (PAR), polybutylene naphthalates (PBN), liquid crystal polyesters, polyoxyalkylene dimide acid/polybutylate terephthalate copolymers and other aromatic polyesters), polynitrile-based resins (e.g., polyacrylonitriles (PAN), polymethacrylonitriles, acrylonitrile/styrene copolymers (AS), methacrylonitrile/styrene copolymers, methacrylonitrile/styrene/butadiene copolymers), polymethacrylate-based resins (e.g., polymethyl methacrylates (PMMA) and polyethyl methacrylates), polyvinyl acetate-based resins (e.g., polyvinyl acetates (PVA) and ethylene/vinyl acetate copolymers (EVA)), polyvinyl alcohol-based resins (e.g., polyvinyl alcohols (PVOH) and vinyl alcohol/ethylene copolymers (EVOH)), polyvinyl chloride-based resins (e.g., polyvinylidene chlorides (PDVC), polyvinyl chlorides (PVC), vinyl chloride/vinylidene chloride copolymers, vinylidene chloride/methyl acrylate copolymers and vinylidene chloride/acrylonitrile copolymers), cellulose-based resins (e.g., cellulose acetates and cellulose acetate butyrates), fluorine-based resins (e.g., polyvinylidene fluorides (PVDF), polyvinyl fluorides (PVF), polychlorotrifluoroethylenes (PCTFE) and tetrafluoroethylene/ethylene copolymers), imide-based resins (e.g., aromatic polyimides (PI)) may be mentioned. These may be used alone or in any combinations of two or more types.

Further, in the present invention, as a thermoplastic elastomer composition capable of being used, as the air permeation preventive layer of a tire, one comprising one or more types of an elastomer component dispersed in one or more of the above thermoplastic resins may be mentioned.

As this elastomer, for example, diene-based rubbers or the hydrogenates thereof (e.g., NR, IR, epoxylated natural rubbers, SBR, BR (high cis BR and low cis BR), NBR, hydrogenated NBR and hydrogenated SBR); olefin-based rubbers (e.g., ethylene propylene rubbers (EPDM and EPM), maleated ethylene propylene rubbers (M-EPM); IIR and isobutylene and aromatic vinyl or diene-based monomer copolymers; acryl rubbers (ACM); halogen-containing rubbers (e.g., Br-IIR, Cl-IIR, brominated isobutylene para-methylstyrene copolymer (BIMS); CR; hydrin rubbers (CHR·CHC); chlorosulfonated polyethylenes (CSM); chlorinated polyethylenes (CM); and maleic acid modified chlorinated polyethylenes (M-CM)); silicone rubbers (e.g., methylvinyl silicone rubbers, dimethyl silicone rubbers and methylphenylvinyl silicone rubbers); sulfur-containing rubbers (e.g., polysulfate rubbers); fluorine rubbers (e.g., a vinylidene fluoride-based rubbers, fluorine-containing vinyl ether-based rubbers, tetrafluoroethylene-propylene-based rubbers, fluorine-containing silicone-based rubbers and fluorine-containing phosphagen-based rubbers), thermoplastic elastomers (e.g., styrene-based elastomers, olefin-based elastomers and polyamide-based elastomers) may be mentioned. These may be used alone or in any combinations thereof.

Further, the thermoplastic resin and thermoplastic elastomer composition may contain, in addition to the above components, to an extent not impairing the necessary characteristics of the polymer composition for a tire, compatibilizers, antioxidants, vulcanizers, vulcanization accelerators, vulcanization accelerator aids, vulcanization retardants, plasticizers, fillers, colorants, processing aids and other various types of general additives.

The air permeation preventive layer may be a thermoplastic film comprising only a thermoplastic resin or thermoplastic elastomer composition, however, normally it is preferable to employ a laminate of the thermoplastic film and an adhesive layer having tackiness to the rubber. As this adhesive layer, for example, a composition of a rubber component (e.g., NR, SBR, IIR, BR, IR, styrene-butadiene-styrene block copolymers (SBS), styrene-isoprene-styrene block copolymers (SIS) and their epoxy modified products and maleic acid modified products), into which a rubber compound strengthening agents (e.g., carbon blacks, calcium carbonates and silicas), adhesive resins (e.g., RF resins), tackifiers (e.g., terpene resins, terpene phenol resins, modified terpene resins, hydrogenated terpene resins, rosin esters or alicyclic saturated hydrocarbon resins) are compounded and further into which vulcanizers, vulcanization accelerators, oils, antiaging agents, plasticizers, pigments and the like are suitably compounded or phenolic resin-based (Chemlock 220), chlorinated rubber-based (Chemlock 205) and isocyanate-based (Chemlock 402) adhesives may be mentioned.

### EXAMPLES

Examples will now be used to further explain the present invention.

### Preparation of Thermoplastic Elastomer Composition

The resin, rubber material and cross-linking compounding agent necessary for dynamic cross-linking in the formulation ratios (parts by weight) shown in Table I were mixed by a twin-screw kneading extruder at a temperature of 230°C to thereby obtain a thermoplastic resin forming a continuous phase in a state in which rubber is finely dispersed. This was extruded in the form of strands from the discharge outlets of the twin-screw kneading extruder. The strands were cut with a cutter to form pellets to thereby prepare pellets of the thermoplastic elastomer.

**Table I**

| Ingredient | Formulation Amount (parts by weight) |
|---|---|
| Nylon 11^{*1} | 24 |
| Nylon 6.66^{*2} | 16 |
| BIMS^{*3} | 60 |
| Zinc white^{*4} | 0.3 |
| Stearic acid^{*5} | 1.2 |
| Zinc stearate^{*6} | 0.6 |

| | |
|---|---|
| *1: BESN O TL manufactured by Arkema *2: 5033B manufactured by Ube Industries *3: Exxpro MDX89-4 manufactured by ExxonMobil Chemical *4: Zinc Oxide #3 manufactured by Seido Chemical Industry *5: Beads Stearic Acid manufactured by NOF *6: Zinc stearate manufactured by Seido Chemical Industry | |

### Reparation of Tackifier Composition

To attach the thermoplastic elastomer composition to the tire inner surface, each formulation ratio (parts by weight) shown in Table II and a twin-screw kneading extruder were used to sufficiently mix a heat cross-linking polymer and a tackifier at a temperature of 100°C, then the mixture was extruded into strands from the discharge outlets. The strands thus obtained were water cooled, then cut into pellets with a cutter to prepare pellets of a tackifier composition.

**Table II**

| Ingredient | Formulation Amount (parts by weight) |
|---|---|
| Epoxy modified SBS^{*1} | 50 |
| SBS^{*2} | 50 |
| Tackifier^{*3} | 100 |
| Zinc white^{*4} | 3 |
| Stearic acid^{*5} | 1 |
| Peroxide^{*6} | 1 |

| | |
|---|---|
| *1: Epofriend A501 manufactured by Daicel Chemical Industries *2: Tufprene 315 manufactured by Asahi Kasei *3: Pensel AD manufactured by Arakawa Chemical Industries *4: Zinc White #3 manufactured by Seido Chemical Industry *5: Beads Stearic Acid manufactured by NOF *6: Parkadox 14 manufactured by Kayaku Akzo | |

### Inflation Molding

Pellets of the thermoplastic elastomer composition and tackifier composition were used and a conventional two-layer inflation molding machine were used for inflation molding of a laminate film at a temperature of 230°C to thereby obtain a laminate film of a thermoplastic elastomer composition and tackifier composition. The thickness of the thermoplastic elastomer composition was 200 µm, and the thickness of the tackifier composition was 50 µm.

### Preparation of Tire

The laminate film was wound on a tire manufacturing drum so that the thermoplastic elastomer composition was on the drum side and the tackifier composition was on the tire member side, the tire members were stacked thereon, the assembly was inflated to form a green tire, then this was vulcanized (conditions: 180°C x 10 minutes) to prepare a tire having a tire size of 165SR13. At the time of vulcanization of the green tire, a vulcanization bladder having releasability was used for vulcanization without coating the inner surface of the tire with a release agent.

### Preparation of Light Blocking Protective Layer

Standard Example 1 using a tire having a thermoplastic elastomer composition arranged as an air permeation preventive layer, but having no light blocking protective layer, Examples 1 to 11 having light blocking protective layers and Comparative Example 1 and Comparative Example 2 having protective layers poor in light blocking properties were tested.

### Standard Example 1

A tire having the thermoplastic elastomer composition placed as the air permeation preventive layer was used as it is.

### Example 1 to Example 5

The method of using the compositions 1 to 5 having the SBR latex of the formulation shown in Table III as a main ingredient to arrange a light blocking protective layer will be shown.

**Table III**

| Formulation contents | Formulation (parts by weight) | | | | |
|---|---|---|---|---|---|
| | Composition 1 | Composition 2 | Composition 3 | Composition 4 | Composition 5 |
| SBR latex^{*1} | 40 | 40 | 40 | 40 | 40 |
| Mica fine powder^{*2} | 5 | 5 | 5 | 5 | 5 |
| Talc fine powder^{*3} | 5 | 5 | 5 | 5 | 5 |
| Surfactant^{*4} | 2 | 2 | 2 | 2 | 2 |
| Carbon black^{*5} | 3 | - | - | - | 3 |
| Titanium oxide^{*6} | - | 7 | - | - | - |
| Zinc oxide^{*7} | - | - | 8.5 | - | - |
| Black iron oxide^{*8} | - | - | - | 8.5 | - |
| Benzotriazole-based ultraviolet light absorber^{*9} | - | - | - | - | 1.5 |
| Water | 45 | 41 | 39.5 | 39.5 | 46.5 |

| | | | | | |
|---|---|---|---|---|---|
| *1: Nipol LX110 (solid content 40.5%) made by Zeon Corporation *2: Mica fine powder: FS Maruai manufactured by Sanshin Mining Ind. *3: SP50A manufactured by Fuji Talc Industrial *4: Sodium lauryl sulfate Emal 10 powder manufactured by Kao Corporation *5: MA-600 manufactured by Mitsubishi Carbon Black *6: R-820 manufactured by Ishihara Sangyo Kaisha *7: Zinc White #3 manufactured by Seido Chemical *8: Iron Black A manufactured by Dainippon Ink and Chemicals *9: Tinuvin234 manufactured by Chiba Specialty Chemicals | | | | | |

### Example 1

According to the formulation of Table III, water and a surfactant were stirred to dissolve, a latex was gradually added thereto, while stirring, then carbon black was gradually added and dispersed in it. To this, mica fine powder and talc fine powder were gradually added to obtain a composition 1 having SBR latex as its main ingredient. This composition 1 was spray coated on the surface of the air permeation preventive layer at the tire inner surface, then dried to form a light blocking protective layer.

### Example 2

According to the formulation of Table III, water and a surfactant were stirred to dissolve, a latex was gradually added thereto, while stirring, then titanium oxide was gradually added and dispersed therein. Mica fine powder and talc fine powder were gradually added thereto to obtain a composition 2 having SBR latex as the main ingredient thereof. This composition 2 was spray coated on the surface of the air permeation preventive layer at the tire inner surface, then dried to form a light blocking protective layer.

### Example 3

According to the formulation of Table III, water and a surfactant were stirred to dissolve, a latex was gradually added thereto, while stirring, then zinc oxide was gradually added and dispersed therein. Mica fine powder and talc fine powder were gradually added thereto to obtain a composition 3 having SBR latex as its main ingredient. This composition 3 was spray coated on the surface of the air permeation preventive layer at the tire inner surface, then dried to form a light blocking protective layer.

### Example 4

According to the formulation of Table III, water and a surfactant were stirred to dissolve, a latex was gradually added thereto, while stirring, then black iron oxide was gradually added and dispersed therein. Mica fine powder and talc fine powder were gradually added thereto to obtain a composition 4 having SBR latex as its main ingredient. This composition 4 was spray coated on the surface of the air permeation preventive layer at the tire inner surface, then dried to form a light blocking protective layer.

### Example 5

According to the formulation of Table III, water and a surfactant were stirred to dissolve, a latex was gradually added thereto, while stirring, then a benzotriazole-based ultraviolet light absorber was gradually added and dispersed therein. Mica fine powder and talc fine powder were gradually added thereto to obtain a composition 5 having SBR latex as its main ingredient. This composition 5 was spray coated on the surface of the air permeation preventive layer at the tire inner surface, then dried to form a light blocking protective layer. Note that, in the above formulation, the benzotriazole-based ultraviolet light absorber was used after being ground into a fine powder in a mortar.

### Examples 6 to 10

The methods of using the compositions 6 to 10 with ethylene vinyl-acetate copolymer (EVA) as main components in the formulations shown in Table IV to arrange light blocking protective layers are shown.

**Table IV**

| Formulation contents | Formulation (parts by weight) | | | | |
|---|---|---|---|---|---|
| | Composition 6 | Composition 7 | Composition 8 | Composition 9 | Composition 10 |
| EVA emulsion^{*1} | 40 | 40 | 40 | 40 | 40 |
| Mica fine powder^{*2} | 5 | 5 | 5 | 5 | 5 |
| Talc fine powder^{*3} | 5 | 5 | 5 | 5 | 5 |
| Surfactant^{*4} | 2 | 2 | 2 | 2 | 2 |
| Carbon black^{*5} | 3 | - | - | - | - |
| Titanium oxide^{*6} | - | 7 | - | - | - |
| Zinc oxide^{*7} | - | - | 8.5 | - | - |
| Black iron oxide^{*8} | - | - | - | 8.5 | - |
| Benzotriazole-based ultraviolet light absorber^{*9} | - | - | - | - | 1.5 |
| Water | 45 | 45 | 45 | 45 | 45 |

| | | | | | |
|---|---|---|---|---|---|
| *1: Ethylene vinyl acetate copolymer emulsion EVA P-3N (nonvolatile content 50%) manufactured by Showa Highpolymer *2: Mica fine powder: FS Maruai manufactured by Sanshin Mining Ind. *3: SP50A manufactured by Fuji Talc Industrial *4: Sodium lauryl sulfate Emal 10 powder manufactured by Kao Corporation *5: MA-600 manufactured by Mitsubishi Carbon Black *6: R-820 manufactured by Ishihara Sangyo Kaisha *7: Zinc White #3 manufactured by manufactured Chemical *8: Iron Black A manufactured by Dainippon Ink and Chemicals *9: Tinuvin 234 manufactured by Chiba Specialty Chemicals | | | | | |

### Example 6

According to the formulation of Table IV, water and a surfactant were stirred to dissolve, an EVA emulsion was gradually added thereto, while stirring, then carbon black was gradually added and dispersed therein. Mica fine powder and talc fine powder were gradually added thereto to obtain a composition 6 having an ethylene-vinyl acetate copolymer as its main ingredient. This composition 6 was spray coated on the surface of the air permeation preventive layer at the tire inner surface, then dried to form a light blocking protective layer.

### Example 7

According to the formulation of Table IV, water and a surfactant were stirred to dissolve, an EVA emulsion was gradually added thereto, while stirring, then titanium oxide was gradually added and dispersed therein. Mica fine powder and talc fine powder were gradually added thereto to obtain a composition 7 having an ethylene-vinyl acetate copolymer as its main ingredient. This composition 7 was spray coated on the surface of the air permeation preventive layer at the tire inner surface, then dried to form a light blocking protective layer.

### Example 8

According to the formulation of Table IV, water and a surfactant were stirred to dissolve, an EVA emulsion was gradually added to thereto, while stirring, then zinc oxide was gradually added and dispersed therein. Mica fine powder and talc fine powder were gradually added thereto to obtain a composition 8 having an ethylene-vinyl acetate copolymer as its main ingredient. This composition 8 was spray coated on the surface of the air permeation preventive layer at the tire inner surface, then dried to form a light blocking protective layer.

### Example 9

According to the formulation of Table IV, water and a surfactant were stirred to dissolve, an EVA emulsion was gradually added thereto, while stirring, then black iron oxide was gradually added and dispersed therein. Mica fine powder and talc fine powder were gradually added thereto to obtain a composition 9 having an ethylene-vinyl acetate copolymer as its main ingredient. This composition 9 was spray coated on the surface of the air permeation preventive layer at the tire inner surface, then dried to form a light blocking protective layer.

### Example 10

According to the formulation of Table IV, water and a surfactant were stirred to dissolve, an EVA emulsion was gradually added thereto, while stirring, then a benzotriazole-based ultraviolet light absorber was gradually added and dispersed therein. Mica fine powder and talc fine powder were gradually added thereto to obtain a composition 10 having an ethylene-vinyl acetate copolymer as its main ingredient. This composition 10 was spray coated on the surface of the air permeation preventive layer at the tire inner surface, then dried to form a light blocking protective layer. Note that, in the above formulation, the benzotriazole-based ultraviolet light absorber was used after being ground into a fine powder in a mortar.

### Example 11

The method of using the composition 11 together with polyethylene (PE) as a main component in the formulation shown in Table V to arrange a light blocking protective layer is shown.

**Table V**

| Formulation contents | Formulation (parts by weight) |
|---|---|
| Polyethylene^{*1} | 100 |
| Carbon black^{*2} | 5 |

| | |
|---|---|
| *1: Novatec LD YF30 manufactured by Japan Polyethylene Corporation *2: MA-600 manufactured by Mitsubishi Carbon Black | |

According to the formulation of Table V, a twin-screw kneading extruder was used to mix the ingredients at a temperature of 150°C and extrude the mixture in the form of strands from the outlets of the twin-screw kneading extruder. The strands were cut by a cutter to form pellets to obtain the composition 11. This composition 11 was shaped by a T-die extruder into a sheet having a thickness of 100 µm, then attached to the air permeation preventive layer surface of the tire inner surface to form a light blocking protective layer. Note that, when attaching the sheet of the light blocking protective layer on the surface of the air permeation preventive layer, an adhesive (Plastic Binder 6225N made by Sumitomo 3M) was used for attachment.

### Comparative Example 1

The following are methods of arranging a protective layer having poor light blocking properties using the composition 12 with SBR latex, as a main component, as shown in Table VI.

**Table VI**

| Formulation contents | Composition 12 formulation (parts by weight) |
|---|---|
| SBR latex^{*1} | by 40 |
| Mica fine powder^{*2} | 5 |
| Talc fine powder^{*3} | 5 |
| Surfactant^{*4} | 2 |
| Water | 45 |

| | |
|---|---|
| *1: Nipol LX110 (solid content 40.5%) manufactured by Zeon Corporation *2: Mica fine powder: FS Maruai manufactured by Sanshin Mining Ind. *3: SP50A manufactured by Fuji Talc Industrial *4: Sodium lauryl sulfate Emal 10 powder manufactured by Kao Corporation | |

According to the formulation of Table VI, water and a surfactant were stirred to dissolve, a latex was gradually added thereto, while stirring, then mica fine powder and talc fine powder were gradually added to obtain a composition 12 having an SAR latex as its main ingredient. This composition 12 was spray coated on the surface of the air permeation preventive layer at the tire inner surface, then dried to form a light blocking protective layer.

### Comparative Example 2

The method of using the composition 13 together with ethylene-vinyl acetate (EVA) as a main component in the formulation shown in Table VII to arrange a protective layer having a poor light blocking property is shown.

**Table VII**

| Formulation contents | Composition 13 formulation (parts by weight) |
|---|---|
| EVA emulsion ^{*1} | 40 |
| Mica fine powder^{*2} | 5 |
| Talc fine powder^{*3} | 5 |
| Surfactant^{*4} | 2 |
| Water | 45 |

| | |
|---|---|
| *1: Ethylene vinyl acetate copolymer emulsion EVA P-3N (nonvolatile content 50%) manufactured by Showa Highpolymer *2: Mica fine powder: FS maruai manufactured by Sanshin Mining Ind. *3: SP50A manufactured by Fuji Talc Industrial *4: Sodium lauryl sulfate Emal 10 powder manufactured by Kao Corporation | |

According to the formulation of Table VII, water and a surfactant were stirred to dissolve, an EVA emulsion was gradually added thereto, while stirring, then mica fine powder and talc fine powder were gradually added to obtain a composition 13 containing an ethylene-vinyl acetate copolymer as its main ingredient. This composition 13 was spray coated on the surface of the air permeation preventive layer at the tire inner surface, then dried to form a protective layer having poor light blocking property.

### Evaluation of Light Blocking Property

In the same way as when forming a protective layer on the tire inner surface, the protective layers of Examples 1 to 11, Comparative Example 1 and Comparative Example 2 were placed on quartz glass plates. Quartz glass has no absorbance in the ultraviolet region at a wavelength range of 280 to 400 nm, and therefore, is preferable for the purpose of a substrate for measuring the light transmittance of the protective layer of the present invention. The prepared samples were measured using a general spectrophotometer for the light absorbance at a range of 280 to 400 nm for every 10 nm. The light absorbance of the quartz glass was also measured in the case where no protective layer is coated. The transmittances were calculated from the absorbances at the different wavelengths when coating the protective layer indexed to the absorbances at the different wavelengths, when the protective layer is not coated as transmittances of 100%. The transmittances at the different wavelengths were averaged to obtain the light transmittance of 280 to 400 nm. The results are shown in Table VIII. Note that the Standard Example 1 does not have a protective layer, and, therefore, its transmittance was made 100% for simplicity.

### Evaluation of Weather Resistance of Tire

Tires provided with the protective layers of Standard Example 1, Examples 1 to 11, Comparative Example 1 and Comparative Example 2 were placed on the ground on their sides and allowed to stand outdoors for 3 months, then were evaluated for weather resistance by the following endurance test.

### Evaluation of Weather Resistance by Tire Endurance Test

Tires (165SR13 steel radial tires (rim 13x41/2-J)) of Standard Example 1, Examples 1 to 11, Comparative Example 1 and Comparative Example 2 after being allowed to stand for 3 months were used and driven on at an air pressure of 140 kPa and a load of 5.5 kN on an actual road for 10,000 km. After driving, the tires were removed from the rims and the liner layers of the tire inner surfaces were visually observed. Tires having liner layer fissures, visually observable wrinkles or peeling and blistering of the liner layers were judged as failing (poor), while those without any of these were judged as passing (good).

The results are shown in Table VIII. In the results of the endurance test, there were fissures and cracks observed in the liner layer of the Standard Example 1 having no protective layer and the Comparative Example 1 and Comparative Example 2 having poor light blocking properties, however, no defects were observed in Examples 1 to 11.

**Table VIII**

| Specifications | Light transmittance | Light resistance |
|---|---|---|
| Standard | 100% | Poor |
| Example 1 | | |
| Example 1 | Less than | Good |
| | 0.1% | |
| Example 2 | 1% | Good |
| Example 3 | 5% | Good |
| Example 4 | Less than | Good |
| | 0.1% | |
| Example 5 | 7% | Good |
| Example 6 | Less than | Good |
| | 0.1% | |
| Example 7 | 1% | Good |
| Example 8 | 5% | Good |
| Example 9 | Less than | Good |
| | 0.1% | |
| Example 10 | 7% | Good |
| Example 11 | Less than | Good |
| | 0.1% | |
| Comparative Example 1 | 60% | Poor |
| Comparative Example 2 | 50% | Poor |

### INDUSTRIAL APPLICABILITY

As explained above, according to the present invention, by placing a light blocking protective layer on the inner surface of a tire provided with a thermoplastic resin or a thermoplastic elastomer composition comprised of a thermoplastic resin in which an elastomer component is dispersed, as an air permeation preventive layer on the inner surface, there can be provided a pneumatic tire having a good weather resistance.

## Claims

1. A method for producing a pneumatic tire comprising:
placing a layer of a thermoplastic resin, or a thermoplastic elastomer composition comprised of a thermoplastic resin in which an elastomer component is dispersed, as an air permeation preventive layer on the inner surface of the tire; and, after vulcanization,
placing a light blocking protective layer on the surface of the air permeation preventive layer.

2. A method for producing a pneumatic tire as claimed in claim 1, wherein the thermoplastic resin is at least one resin selected from the group consisting of polyamide-based resins, polyester-based resins, polynitrile-based resins, polymethacrylate-based resins, polyvinyl acetate-based resins, polyvinyl alcohol-based resins, polyvinyl chloride-based resins, cellulose-based resins, fluorine-based resins and imide-based resins.

3. A method for producing a pneumatic tire as claimed in claim 1 or 2, wherein the elastomer component in the thermoplastic elastomer composition is at least one elastomer selected from the group consisting of a diene-based rubbers, olefin-based rubbers, sulfur-containing rubbers, fluorine-containing rubbers and thermoplastic elastomers.

4. A method for producing a pneumatic tire as claimed in any one of claims 1 to 3, wherein a light transmittance of the light blocking protective layer is less than 10% at a wavelength range of 280 to 400 nm.

5. A method for producing a pneumatic tire as claimed in any one of claims 1 to 4, wherein the light blocking protective layer is obtained by coating a solution or dispersion in water or an organic solvent onto a surface of the air permeation preventive layer of the pneumatic tire after the vulcanization, followed by drying the same.

6. A method for producing a pneumatic tire as claimed in any one of claims 1 to 4, wherein the light blocking protective layer is previously shaped into a sheet and, then, attached onto a surface of the air permeation preventive layer of the pneumatic tire after vulcanization.

## Patentansprüche

1. Verfahren zur Herstellung eines pneumatischen Reifens, das folgendes umfasst:
Platzieren einer Schicht eines thermoplastischen Harzes oder einer thermoplastischen Elastomerzusammensetzung, die ein thermoplastisches Harz umfasst, in dem eine Elastomerkomponente dispergiert ist, als Luftdurchlässigkeits-Verhütungsschicht auf der inneren Oberfläche des Reifens; und nach dem Vulkanisieren,
Platzieren einer Licht-Sperr-Schutzschicht auf der Oberfläche der Luftdurchlässigkeits-Verhütungsschicht.

2. Verfahren zur Herstellung eines pneumatischen Reifens gemäß Anspruch 1, worin das thermoplastische Harz mindestens eins ist, das ausgewählt ist aus Polyamidbasierten Harzen, Polyester-basierten Harzen, Polynitril-basierten Harzen, Polymethacrylat-basierten Harzen, Polyvinylacetat-basierten Harzen, Polyvinylalkohol-basierten Harzen, Polyvinylchloridbasierten Harzen, Cellulose-basierten Harzen, Fluorbasierten Harzen und Imid-basierten Harzen.

3. Verfahren zur Herstellung eines pneumatischen Reifens gemäß Anspruch 1 oder 2, worin die Elastomerkomponente in der thermoplastischen Elastomerzusammensetzung mindestens ein Elastomer ist, das ausgewählt ist aus Dien-basierten Kautschuken, Olefin-basierten Kautschuken, schwefelhaltigen Kautschuken, fluorhaltigen Kautschuken und thermoplastischen Elastomeren.

4. Verfahren zur Herstellung eines pneumatischen Reifens gemäß mindestens einem der vorhergehenden Ansprüche 1 bis 3, worin die Lichtdurchlässigkeit der Licht-Sperr-Schutzschicht geringer ist als 20 % bei einem Wellenlängenbereich von 280 bis 400 nm.

5. Verfahren zur Herstellung eines pneumatischen Reifens gemäß mindestens einem der Ansprüche 1 bis 4, worin die Licht-Sperr-Schutzschicht erhältlich ist durch Beschichten einer Lösung oder Dispersion in Wasser oder einem organischen Lösungsmittel auf eine Oberfläche der Luftdurchlässigkeits-Verhütungsschicht des pneumatischen Reifens nach dem Vulkanisieren gefolgt von deren Trocknung.

6. Verfahren zur Herstellung eines pneumatischen Reifens gemäß mindestens einem der Ansprüche 1 bis 4, worin die Licht-Sperr-Schutzschicht vorher in ein Blatt geformt wird und anschließend auf einer Oberfläche der Luftdurchlässigkeits-Verhütungsschicht des pneumatischen Reifens nach dem Vulkanisieren befestig wird.

## Revendications

1. Procédé pour produire un pneu pneumatique comprenant les étapes consistant à:
placer une couche d'une résine thermoplastique, ou d'une composition d'élastomère thermoplastique composée d'une résine thermoplastique dans laquelle un composant élastomère est dispersé, en tant que couche préventive contre la perméation d'air sur la surface intérieure du pneu ; et, après vulcanisation,
placer une couche protectrice bloquant de la lumière sur la surface de la couche préventive contre la perméation d'air.

2. Procédé pour produire un pneu pneumatique selon la revendication 1, dans lequel la résine thermoplastique est au moins une résine sélectionnée à partir du groupe constitué par des résines à base de polyamide, des résines à base de polyester, des résines à base de polynitrile, des résines à base de polyméthacrylate, des résines à base d'acétate de polyvinyle, des résines à base d'alcool de polyvinyle, des résines à base de chlorure de polyvinyle, des résines à base de cellulose, des résines à base de fluor et des résines à base d'imide.

3. Procédé pour produire un pneu pneumatique selon la revendication 1 ou 2, dans lequel le composant élastomère dans la composition d'élastomère thermoplastique est au moins un élastomère sélectionné à partir du groupe constitué par des caoutchoucs à base de diène, des caoutchoucs à base d'oléfine, des caoutchoucs contenant du soufre, des caoutchoucs contenant du fluor et des élastomères thermoplastiques.

4. Procédé pour produire un pneu pneumatique selon l'une quelconque des revendications 1 à 3, dans lequel une transmittance de lumière de la couche protectrice bloquant de la lumière est inférieure à 10 % à une plage de longueurs d'onde de 280 à 400 nm.

5. Procédé pour produire un pneu pneumatique selon l'une quelconque des revendications 1 à 4, dans lequel la couche protectrice bloquant de la lumière est obtenue en revêtant une solution ou une dispersion dans de l'eau ou dans un solvant organique sur une surface de la couche préventive contre la perméation d'air du pneu pneumatique après la vulcanisation, suivi par un séchage de celle-ci.

6. Procédé pour produire un pneu pneumatique selon l'une quelconque des revendications 1 à 4, dans lequel la couche protectrice bloquant de la lumière est formée à l'avance en une feuille et, ensuite, attachée sur une surface de la couche préventive contre la perméation d'air du pneu pneumatique après vulcanisation.
